Europäisches Patentamt

European Patent Office

Office européen des brevets

(11) Veröffentlichungsnummer: **0 485 702 B1**

# EUROPÄISCHE PATENTSCHRIFT

(45) Veröffentlichungstag der Patentschrift: **12.10.94**

(51) Int. Cl.⁵: **B60L  1/10**

(21) Anmeldenummer: **91114981.3**

(22) Anmeldetag: **05.09.91**

(54) **Mehrsystem-Energieversorgungsanlage eines Reisezugwagens.**

(30) Priorität: **16.11.90 DE 4036652**

(43) Veröffentlichungstag der Anmeldung:
**20.05.92 Patentblatt  92/21**

(45) Bekanntmachung des Hinweises auf die
Patenterteilung:
**12.10.94 Patentblatt  94/41**

(84) Benannte Vertragsstaaten:
**AT BE CH DE ES FR IT LI**

(56) Entgegenhaltungen:
**EP-A- 0 024 448
EP-A- 0 115 857**

(73) Patentinhaber: **Krupp Verkehrstechnik GmbH
Falckensteiner Strasse 2
D-24159 Kiel (DE)**

(72) Erfinder: **Seeger, Herbert Dipl.Ing.
Bergische Strasse 32
W-4320 Hattingen 16 (DE)**

(74) Vertreter: **Hansmann, Dierk, Dipl.-Ing.
Patentanwälte
Hansmann-Klickow-Hansmann
Jessenstrasse 4
D-22767 Hamburg (DE)**

**Beschreibung**

Die Erfindung betrifft eine Mehrsystem-Energieversorgungsanlage eines Reisezugwagens mit einer an die Sammelschiene angeschlossenen Gleichrichteranordnung und einer den Verbrauchern vorgeschalteten Transformatoranordnung. Zu Reisezugwagen im Sinne der vorliegenden Erfindung werden auch Speise- und Schlafwagen und Wagen von Triebwagenzügen gezählt.

Beim Betreiben von Reisezugwagen in den Netzen der europäischen Eisenbahngesellschaften können folgende vier Strom- bzw. Spannungssysteme auftreten:

| Gleichstrom | 1500 V | |
| " | 3000 V | |
| Wechselstrom | 15000 V | 16 2/3 Hz |
| " | 25000 V | 50 Hz |

Die angegebenen Nennwerte können um ± 25 % schwanken. Die Bezeichnung "Mehrsystem" bedeutet, daß die Energieversorgungsanlage für mindestens zwei der angegebenen Gleich- und Wechselstromsysteme geeignet ist.

Die Energie für die Nutzverbraucher des Reisezugwagens wird der durch den Zug und damit durch die einzelnen Wagen hindurchgehenden Zugsammelleitung (im folgenden auch nur kurz als "Sammelleitung" bezeichnet) entnommen, die über den Stromabnehmer des Triebfahrzeugs (Lokomotive) an die Fahrleitung angeschlossen ist, und zwar bei Wechselstromnetzen über einen Transformator. Nutzverbraucher in einem Reisezugwagen sind u. a. Batterieladegeräte, Brauchwasserbereiter, Vorraumheizungen, Heizungen, WC-Heizungen, Küchenmaschinen sowie Klimatisierungsanlagen, die einen Kompressor, einen Zuluftventilator und bei Reisezugwagen für hohe Geschwindigkeiten eine Druckschutzanlage haben. Die Kompressoren und Zuluftventilatoren werden mit variablen Drehzahlen und die Druckschutzanlagen mit einstellbaren Drehzahlen betrieben.

Je nach Strom- bzw. Spannungssystem des jeweiligen Eisenbahnnetzes liegen an der Sammelschiene (die angegebenen Spannungswerte sind Nennwerte)

| Gleichstrom | 1500 V | |
| " | 3000 V | |
| Wechselstrom | 1000 V | 16 2/3 Hz |
| " | 1500 V | 50 Hz |

an.

Der vorliegenden Erfindung liegt die Aufgabe zugrunde, eine Energieversorgungsanlage der eingangs genannten Art zu schaffen, deren elektrische Schaltung einfach gestaltet ist und mit einer geringen Anzahl von Schaltelementen auskommt und deren spezifisches Leistungsgewicht und -volumen möglichst gering ausfällt.

Diese Aufgabe wird erfindungsgemäß dadurch gelöst, daß die Transformatoranordnung zwei Primärwicklungen aufweist und diese über einen Wechselrichter mit Thystorschaltern an der Gleichrichteranordnung angeschlossen sind. Die erfindungsgemäße Energieversorgungsanlage kommt dank der beiden Primärwicklungen selbst bei allen vier europäischen Stromsystemen mit nur insgesamt drei Umschaltschützen aus.

Vorteilhafterweise sind die Thyristorschalter des Wechselrichters als löschbare Thyristoren ausgebildet und mit ihrer Steuerelektrode an je eine Zünd- und Löscheinrichtung angeschlossen, die zudem vorzugsweise eine Pulsweitenmodulationssteuerung aufweisen. Mit dieser besonderen Ausbildung der Energieversorgungsanlage ist es möglich, die Spannung der sekundärseitig mit der Transformatoranordnung verbundenen Wagensammelschiene auch bei einer Überspannung der Zugsammelschiene konstant zu halten.

Die dem Wechselrichter vorgeschaltete Gleichrichteranordnung ist vorzugsweise ebenfalls mit löschbaren Thyristorschaltern ausgerüstet, deren Steuerelektroden mit einer Sektorsteuerung verbunden sind. Mit dieser vorteilhaften Weiterbildung läßt sich die durch den Filter des Wechselrichters bedingte Phasenverschiebung weitgehend ausgleichen und dementsprechend die Scheinleistung begrenzen. Durch die Begrenzung der Scheinleistung ist eine bessere Ausnutzung der Energieversorgungsanlage gegeben, was insbesondere bei der Betriebsfrequenz von 16 2/3 Hz von Bedeutung ist.

EP 0 485 702 B1

In weiterer Ausbildung der Erfindung ist den Wechsel- bzw. Drehstromverbrauchern ein an die Enden der Sekundärwicklung der Transformatoranordnung angeschlossener zentraler Gleichrichter vorgeschaltet, wobei die einzelnen Wechsel- bzw. Drehstromverbraucher über je einen separaten Frequenzumrichter an den zentralen Gleichrichter angeschlossen sind. Das Vorsehen des einen zentralen Gleichrichters reduziert die Anzahl der Elemente der Energieversorgungsanlage und damit gleichzeitig das spezifische Leistungsgewicht und -volumen der gesamten Anlage.

Die Hauptheizkörper und die Nachheizkörper sind vorteilhafterweise je an die halbe Spannung der Sekundärwicklung der Transformatoranordnung angeschlossen. Bedingt durch die niedrigere Spannung entfallen die bei derzeitigen Konzepten benötigte Hochspannungs-Umschalteinrichtung, Hochspannungs-Schaltgeräte sowie Heizkörper in Hochspannungsausführung.

Weiterhin ist vorgesehen, die an der Sekundärwicklung der Transformatoranordnung angeschlossene Wagensammelschiene mit Kupplungen zu versehen. Mit dieser Maßnahme ist es möglich, auch solche Wagen mit Energie zu versehen, deren Energieversorgungsanlage keinen Eingangsteil (Eingangsgleichrichter, Wechselrichter, Transformator) besitzt.

Ein Ausführungsbeispiel der Erfindung ist in der Zeichnung dargestellt und wird im folgenden näher erläutert. Es zeigen

Fig. 1 eine erfindungsgemäße Energieversorgungsanlage beim Betrieb mit Wechselstrom und beim Betrieb mit 1500 V Gleichstrom,

Fig. 2 die Energieversorgungsanlage beim Betrieb mit 3000 V Gleichstrom in einer auszugsweisen Darstellung und

Fig. 3 die Kupplung der Wagensammelschienen zweier Reisezugwagen.

Die durch einen aus einzelnen Reisezugwagen zusammengestellten Zug hindurchgehende Sammelschiene ZS ist über den Stromabnehmer des Triebfahrzeugs (der Lokomotive) - bei Wechselstrom unter Vermittlung eines Transformators - an die Fahrleitung des jeweiligen Bahnnetzes angeschlossen. An diese Sammelschiene ZS ist eine Eingangsspannungserfassung E angeschlossen, die sich in bekannter Weise dazu eignet, die an der Sammelschiene ZS anliegende Spannung und die zugehörige Frequenz zu erfassen und aufgrund der ermittelten Werte Steuerimpulse an Schalteinrichtungen zu erteilen.

Parallel zur Eingangsspannungserfassung E ist an der Sammelschiene ZS über eine Eingangssicherung 1, ein Einschaltschütz 2, einen Dauerwiderstand 3 und einen Anlaßwiderstand 4, zu dem ein Überbrückungsschütz 5 parallel geschaltet ist, ein Gleichrichter 6 mit integrierter Sektorsteuerung (λ-Regelung) angeschlossen.

An dem Gleichrichter 6 ist ausgangsseitig ein Wechselrichter, der im Hinblick auf die mit Energie zu versorgenden Verbraucher auch als Hochspannungs-Wechselrichter bezeichnet werden kann, mit einem Wechselrichter-Transformator 13 angeschlossen. Der Wechselrichter besteht im einzelnen aus einer Drossel 7, zwei Kondensatoren 8, 9, die mit der Drossel 7 einen Filter bilden, und zwei Halbleitern 14, 15. Die Halbleiter 14, 15 sind als löschbare Thyristorschalter (auch als GTO bezeichnet) ausgebildet, die durch die Zünd- und Löscheinrichtungen 36 bzw. 37 mit vorgebbarem Takt von 50 Hz symmetrisch um 180° verschoben über Steuerleitungen zünd- und löschbar sind.

Der mit der Drossel 7 in Reihe geschaltete Kondensator 8 kann alternativ über ein Umschaltschütz 10 unmittelbar oder über ein Umschaltschütz 11 über den Kondensator 9, d. h. in Reihenschaltung der Kondensatoren 8, 9, mit der Kathode des Gleichrichters 6 verbunden werden. Der Kondensator 9 kann durch ein weiteres Umschaltschütz 12 parallel zum Kondensator 8 geschaltet werden.

Durch die Sektorsteuerung des Gleichrichters 6 werden die gleichgerichteten positiven Halbwellen sowohl von ihrem Beginn als auch von ihrem Ende her angeschnitten. Der Gleichchrichter 6 ist dazu ebenfalls mit löschbaren Thyristorschaltern (GTO-Thyristoren) ausgestattet. Bei etwa gleich großem Phasenanschnittwinkel vom Beginn und Ende der Halbwelle aus kann die durch den Filter (7 bis 9) bedingte Phasenverschiebung φ soweit kompensiert werden, daß der λ-Wert (λ = cos φ) von etwa 0,85 auf 0,95 angehoben werden kann. Dadurch wird die die Sammelschiene ZS belastende Scheinleistung erheblich reduziert und der Wirkleistung angenähert, was sich insbesondere bei der Frequenz von 16 2/3 Hz deutlich bemerkbar macht.

Die Umschaltschütze 10 bis 12 werden von der Eingangsspannungserfassung E in Abhängigkeit von der an der Sammelschiene ZS anliegenden Spannung wie folgt geschaltet:

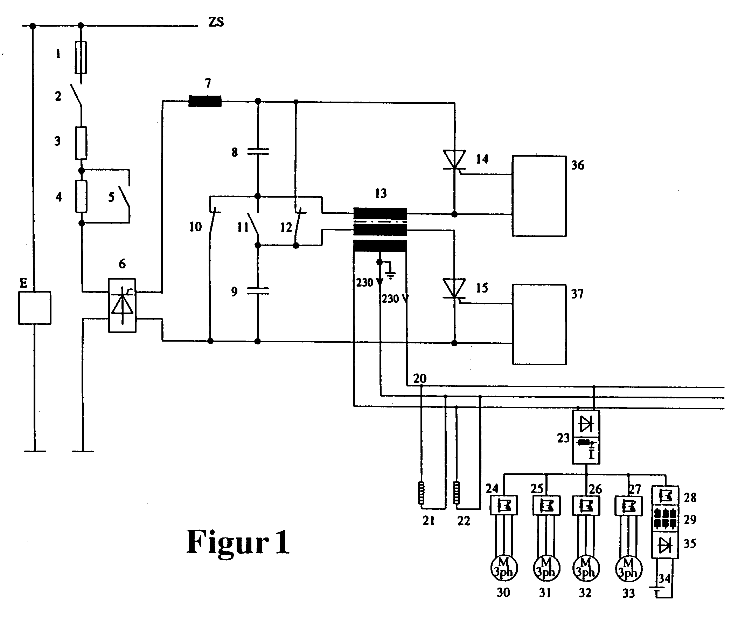

- bei Wechselstrom 1000 V 16/23 Hz und 1500 V 50 Hz und bei 1500 V Gleichstrom sind (vgl. Fig. 1) die Umschaltschütze 10 und 12 geschlossen und das Umschaltschütz 11 geöffnet und

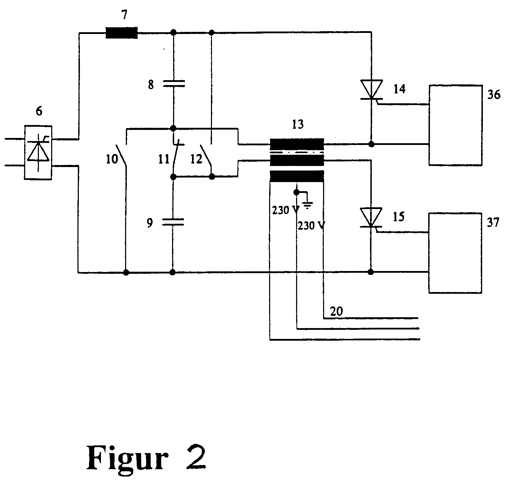

- bei 3000 V Gleichstrom sind umgekehrt (vgl. Fig. 2) die Umschaltschütze 10 und 12 geöffnet und das Umschaltschütz 11 geschlossen.

Der Thyristorschalter 14 ist mit seiner Anode mit der Drossel 7 und der Wechselrichter 15 mit seiner Kathode mit der Kathode des Gleichrichters 6 verbunden.

3

Die Thyristorschalter 14, 15 können durch die Zünd- und Löscheinrichtungen 36 bzw. 37 nach dem Pulsverfahren (Pulsweitenmodulation) mit Nadelimpulsen mehrmals je Halbwelle gezündet und gelöscht werden, wodurch den Primärwicklungen des Transformators 13 eine Spannung mit einem nahe an die Sinus-Form herankommenden Verlauf zur Verfügung gestellt wird.

Der dem Wechselrichter (7 bis 9, 14, 15) zugeordnete Transformator 13 ist mit zwei hochspannungsseitigen Primärwicklungen und einer Sekundärwicklung versehen. Die eine Primärwicklung ist zwischen der Kathode des ersten Thyristorschalters 14 und den Schaltschützen 10, 11 angeordnet. Die andere Primärwicklung ist einerseits mit der Anode des anderen Thyristorschalters 15 und andererseits über den Kondensator 9 mit der Kathode des Gleichrichters 6 verbunden und weiterhin über das Umschaltschütz 12 und die Drossel 7 mit der Anode des Gleichrichters 6 verbindbar.

Von der Sekundärwicklung des Transformators 13 geht eine sog. Wagensammelschiene 20 aus, die aus drei einzelnen Leitungen besteht, von denen je eine an den beiden Enden und eine in der Mitte der Sekundärwicklung angeschlossen ist. Die Nennspannung der Wechselspannung der Wagensammelschiene 20 beträgt 2 x 230 V und ihre Frequenz, der Taktfrequenz der Zünd- und Löscheinrichtungen 36, 37 entsprechend, 50 Hz.

An der Wagensammelschiene 20 sind jeweils zwischen dem Mittelleiter und einem der anderen Leiter bei je 230 V als Verbraucher die Hauptheizkörper 21 und die Nachheizkörper 22 direkt angeschlossen.

Zwischen den beiden an den Enden der Sekundärwicklung des Transformators 13 angeschlossenen Außenleitungen der Wagensammelschiene 20 mit einer Wechselspannung von 460 V 50 Hz ist ein mit einem nachgeschalteten Filter versehener zentraler Gleichrichter 23 angeschlossen, an dem wiederum vier Frequenzumrichter oder -wandler 24 bis 27 mit je einem nachgeschalteten Drehstrommotor 30 bis 33 für die Kälteanlage, den Zuluftventilator, den Druckschutzventilator "Zuluft" und den Druckschutzventilator "Fortluft" sowie ein Frequenzumrichter 28 mit nachgeschaltetem Transformator 29 und Gleichrichter 35 zur Ladung einer Batterie 34 angeschlossen sind.

Die Frequenzumformer (Frequenzwandler) 24 bis 28 sind als Pulswechselrichter mit variabler Ausgangsspannung und Frequenz ausgeführt. Als Eingangsspannung für diese Komponenten dient die volle Ausgangsspannung des Transformators 13 von 460 V 50 Hz. Diese Spannung wird im zentralen Gleichrichter 23 gleichgerichtet und durch das nachgeschaltete Filter geglättet. Die Gleichspannung hinter dem Filter wird dann den einzelnen Frequenzumrichtern und dem Batterieladegerät (28 bis 35) zugeführt.

Die Spannung an der Wagensammelschiene 20 wird, wenn die Spannung an der Sammelschiene ZS größer ist als die Nennspannung (maximal zulässige Überspannung 25%) über die beschriebene Pulsweitenmodulation (Pulsverfahren) auf 2 x 230 V 50 Hz konstant geregelt, indem die Gesamtöffnungszeit der Wechselrichter 14, 15 für alle Impulse einer Halbwelle in Abhängigkeit von der abverlangten Leistung der Nutzverbraucher (Klimaanlage usw) und der Eingangsspannung verändert wird.

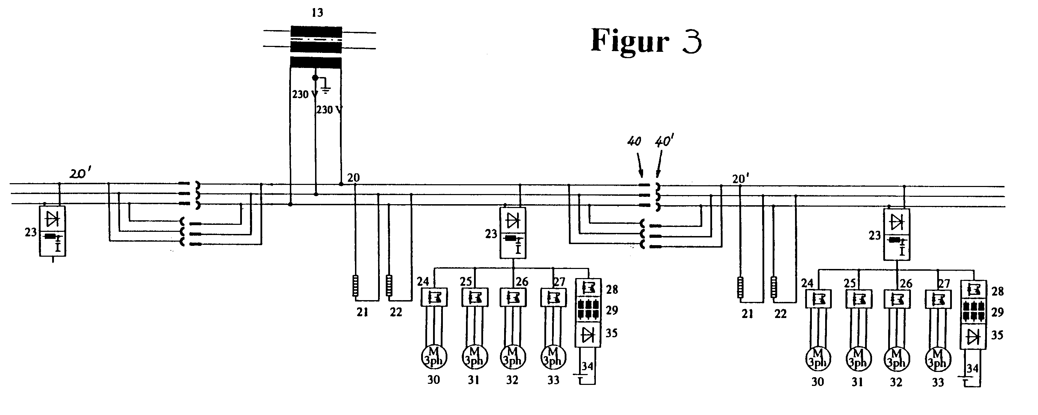

Bei dem Ausführungsbeispiel gemäß Fig. 3 weist die Wagensammelschiene 20 eines Reisezugwagens an jedem Ende eine Steckkupplung 40 auf. An ihrem rechten Ende ist die Wagensammelschiene 20 über die Kupplungen 40, 40' mit der Wagensammelschiene 20' eines anderen Reisezugwagens verbunden. Die Energieversorgungsanlage des anderen Reisezugwagens hat keinen eigenen Eingangsteil (Eingangsgleichrichter, Wechselrichter, Transformatoranlage) und wird von der Energieversorgungsanlage mit dem Transformator 13 des erstgenannten Reisezugwagens mitversorgt. Er weist lediglich den zentralen Gleichrichter 23 mit Filter und die Frequenzumrichter 24 bis 28 für die verschiedenen Verbraucher 30 bis 34 auf. An der linken Seite der Wagensammelschiene 20 kann ebenfalls ein Reisezugwagen ohne eigenen Eingangsteil der Energieversorgungsanlage angeschlossen werden.

## Patentansprüche

1. Mehrsystem-Energieversorgungsanlage eines Reisezugwagens mit einer an die Sammelschiene (ZS) angeschlossenen Gleichrichteranordnung (6) und einer den Verbrauchern (21, 22, 30 bis 34) vorgeschalteten Transformatoranordnung (13),
   **dadurch gekennzeichnet,**
   daß die Transformatoranordnung (13) zwei Primärwicklungen aufweist und diese über einen Wechselrichter (7 bis 9, 14, 15) mit Thyristorschaltern (14, 15) an der Gleichrichteranordnung (6) angeschlossen sind.

2. Energieversorgungsanlage nach Anspruch 1, dadurch gekennzeichnet, daß die Thyristorschalter (14, 15) als löschbare Thyristoren ausgebildet und mit ihrer Steuerelektrode an eine Zünd- und Löscheinrichtung (36 bzw. 37) angeschlossen sind.

3. Energieversorgungseinrichtung nach Anspruch 2, dadurch gekennzeichnet, daß die Zünd- und Löscheinrichtungen (36, 37) eine Pulsweitenmodulationssteuerung aufweisen.

4. Energieversorgungseinrichtung nach einem der Ansprüche 1 bis 3, dadurch gekennzeichnet, daß die dem Wechselrichter (7 bis 9, 14, 15) vorgeschaltete Gleichrichteranordnung (6) mit löschbaren Thyristorschaltern (14, 15) ausgerüstet ist, deren Steuerelektroden mit einer Sektorsteuerung verbunden sind.

5. Energieversorgungsanlage nach einem der vorangegangenen Ansprüche, dadurch gekennzeichnet, daß den Wechsel- bzw. Drehstromverbrauchern (30 bis 33) ein an die Enden der Sekundärwicklung der Transformatoranordnung (13) angeschlossener zentraler Gleichrichter (23) vorgeschaltet ist, wobei die einzelnen Wechsel- bzw. Drehstromverbraucher (30 bis 33) über je einen separaten Freuqenzumrichter (24 bis 27) an den zentralen Gleichrichter (23) angeschlossen sind.

6. Energieversorgungseinrichtung nach einem der vorangegangenen Ansprüche, dadurch gekennzeichnet, daß die Hauptheizkörper (21) und die Nachheizkörper (22) je an die halbe Spannung der Sekundärwicklung der Transformatoranordnung (13) angeschlossen sind.

7. Energieversorgungseinrichtung nach einem der vorangegangenen Ansprüche, dadurch gekennzeichnet, daß die an der Sekundärwicklung der Transormatoranordnung (13) angeschlossene Wagensammelschiene (20) Kupplungen (40) besitzt.

**Claims**

1. Multisystem power supply plant of a passenger train carriage with a rectifier arrangement (6), which is connected to the busbar (ZS), and a transformer arrangement (13), which is disposed upstream of the consumer units (21, 22, 30 to 34), characterised in that the transformer arrangement (13) comprises two primary windings and these are connected via an inverter (7 to 9, 14, 15) with thyristor switches (14, 15) to the rectifier arrangement (6).

2. Power supply plant according to claim 1, characterised in that the thyristor switches (14, 15) are formed as gate turn-off thyristors and are connected by way of their gate to a turn-on and turn-off device (36 and 37, respectively).

3. Power supply plant according to claim 2, characterised in that the turn-on and turn-off devices (36, 37) comprise a pulse-width modulation control unit.

4. Power supply plant according to one of claims 1 to 3, characterised in that the rectifier arrangement (6), which is disposed upstream of the inverter (7 to 9, 14, 15), is provided with gate turn-off thyristor switches (14, 15), the gates of which are connected to a sector control unit.

5. Power supply plant according to one of the preceding claims, characterised in that a central rectifier (23), which is connected to the ends of the secondary winding of the transformer arrangement (13), is disposed upstream of the alternating-current or three-phase consumer units (30 to 33), the individual alternating current or three-phase consumer units (30 to 33) being connected to the central rectifier (23) via a respective separate frequency converter (24 to 27).

6. Power supply plant according to one of the preceding claims, characterised in that the main heater (21) and the boost heater (22) are in each case connected to half the voltage of the secondary winding of the transformer arrangement (13).

7. Power supply plant according to one of the preceding claims, characterised in that the carriage busbar (20) connected to the secondary winding of the transformer arrangement (13) comprises couplings (40).

**Revendications**

1. Centrale de délivrance d'énergie à système multiple d'une voiture de train comprenant un système redresseur (6) raccordé au circuit de distribution électrique (ZS) et un système transformateur (13) en amont des unités de consommation (21, 22, 30 à 34), caractérisée par le fait que le système transformateur (13) possède deux enroulements primaires raccordés au système redresseur (6) via un onduleur (7 à 9, 14, 15) à commutation par thyristors (14, 15).

2. Centrale de délivrance d'énergie selon la revendication 1, caractérisée par le fait que les commutateurs à thyristors (14, 15) sont construits avec des thyristors à blocage dont l'électrode de commande est raccordée à un système d'allumage et de blocage (36 resp. 37).

3. Centrale de délivrance d'énergie selon la revendication 2, caractérisée par le fait que les systèmes d'allumage et de blocage (36, 37) sont commandés par un circuit de modulation de durée des impulsions.

4. Centrale de délivrance d'énergie selon les revendications 1 à 3, caractérisées par le fait que le système redresseur (6) raccordé en amont de l'onduleur (7 à 9, 14, 15) est équipé de thyristors à blocage (14, 15) dont les électrodes de commande sont pilotées par un système de commande de l'angle d'ouverture.

5. Centrale de délivrance d'énergie selon une des revendications précédentes caractérisée par le fait que les unités de consommation mono- et triphasés (30 à 33) sont alimentés par un redresseur central (23) raccordé aux extrémités de l'enroulement secondaire du système transformateur (13) dans quel cas chaque consommateur mono- ou triphasé (30 à 33) est raccordé au redresseur central (23) via un convertisseur de fréquence (24, 27) séparé.

6. Centrale de délivrance d'énergie selon une des revendications précédentes caractérisée par le fait que les appareils de chauffage principaux (21) et les appareils de chauffage de maintien (22) sont raccordés à la demi-tension de l'enroulement secondaire du système transformateur (13).

7. Centrale de délivrance d'énergie selon une des revendications précédentes caractérisée par le fait que le circuit de distribution de voiture (20) raccordé à l'enroulement secondaire du système transformateur (13) est muni de connecteurs (40).

Figur 1

EP 0 485 702 B1

**Figur 2**

Figur 3

EP 0 485 702 B1